(19) Europäisches Patentamt
European Patent Office
Office européen des brevets

(11) **EP 4 098 464 B1**

(12) **EUROPÄISCHE PATENTSCHRIFT**

(45) Veröffentlichungstag und Bekanntmachung des Hinweises auf die Patenterteilung:
**10.06.2026 Patentblatt 2026/24**

(21) Anmeldenummer: **22169375.7**

(22) Anmeldetag: **22.04.2022**

(51) Internationale Patentklassifikation (IPC):
***B60K 1/00*** *(2006.01)*     ***B60K 7/00*** *(2006.01)*

(52) Gemeinsame Patentklassifikation (CPC):
**B60K 1/00; B60K 7/0007;** B60K 2001/001; B60K 2007/0038; B60K 2007/0092

(54) **ANTRIEBSANORDNUNG**

DRIVE ARRANGEMENT

DISPOSITIF D'ENTRAÎNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.05.2021 DE 102021205497**

(43) Veröffentlichungstag der Anmeldung:
**07.12.2022 Patentblatt 2022/49**

(73) Patentinhaber: **Robert Bosch GmbH
70442 Stuttgart (DE)**

(72) Erfinder: **Schlittenbauer, Tobias
71679 Asperg (DE)**

(56) Entgegenhaltungen:
DE-A1- 102017 006 266     DE-B3- 102019 212 556
DE-B4- 102015 207 074

EP 4 098 464 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Stand der Technik

Die Erfindung betrifft eine Antriebsanordnung gemäß dem Oberbegriff von Anspruch 1.

Antriebsanordnungen, bei denen eine elektrische Maschinen mit einem Planetengetriebe gekoppelt ist, sind aus dem Stand der Technik bekannt. Ebenfalls ist es bekannt, elektrische Antriebe als elektrische Achsen oder als Radnabenantriebe auszuführen.

DE 10 2015 207 074 B4 offenbart eine Antriebsvorrichtung für ein Fahrzeug, mit einem Radträger, einem Fahrzeugrad, einem Dämpfer, einem Elektromotor und einem Fahrzeuggetriebe, welches als zweistufiges Planetengetriebe ausgebildet ist. Der Elektromotor erstreckt sich entlang des Dämpfers und ist mittels eines Kegelradgetriebes mit der Eingangswelle des Fahrzeugsgetriebes gekoppelt. Diese Antriebsvorrichtung beansprucht einen großen Bauraum.

Aus der DE 10 2017 006 266 A1 ist eine gattungsbildende Antriebsanordnung bekannt. Weitere Antriebsanordnungen sind aus der DE 10 2019 212 556 B3 und aus der DE 10 2015 207 074 B4 bekannt.

Offenbarung der Erfindung

Das der Erfindung zugrundeliegende Problem wird durch eine Antriebsanordnung mit den Merkmalen des Anspruchs 1 gelöst. Vorteilhafte Weiterbildungen der Erfindung sind in den Unteransprüchen genannt.

Erfindungsgemäß wird eine Antriebsanordnung, insbesondere für ein Fahrzeug, vorgeschlagen, die eine elektrische Maschine, ein Getriebe und eine Abtriebswelle aufweist. Das Getriebe weist eine erste Planetenstufe (erstes Planetengetriebe) und eine zweite Planetenstufe (zweites Planetengetriebe) auf. Die elektrische Maschine ist mit einer Antriebswelle gekoppelt, so dass die elektrische Maschine die Antriebswelle (drehend) antreiben kann. Die Antriebswelle ist drehfest mit einem Sonnenrad der ersten Planetenstufe verbunden. Ein Hohlrad der ersten Planetenstufe, welches, insbesondere über Planetenräder der ersten Stufe, mit dem Sonnenrad der ersten Planetenstufe gekoppelt ist, ist mittels einer Zwischenwelle drehfest mit einem Sonnenrad der zweiten Planetenstufe verbunden. Ein Hohlrad der zweiten Planetenstufe, welches, insbesondere über Planetenräder der zweiten Stufe, mit dem Sonnenrad der zweiten Planetenstufe gekoppelt ist, ist drehfest mit der Abtriebswelle verbunden. Das Sonnenrad der ersten Planetenstufe ist mittels Planetenrädern der ersten Planetenstufe mit dem Hohlrad der ersten Planetenstufe gekoppelt ist, wobei die Planetenräder der ersten Planetenstufe an einem Abschnitt der Abtriebswelle, insbesondere an dem schalenförmigen Abschnitt der Abtriebswelle, drehbar gelagert sind, wobei die Abtriebswelle mit einem Differentialgetriebe, insbesondere einem Kegelraddifferential oder einem Stirnraddifferential, gekoppelt ist, so dass die Abtriebswelle das Differentialgetriebe, insbesondere dessen Differentialkorb oder Umlauffradträger, antreiben kann, und wobei das Differentialgetriebe zwei Abtriebswellen aufweist. Erfindungsgemäß ist die Antriebswelle als Hohlwelle ausgebildet und eine der Abtriebswellen erstreckt sich, insbesondere koaxial, durch die Antriebswelle hindurch. Dies begünstigt eine in radialer Richtung kompakte Bauweise. Somit kann die Antriebsanordnung insbesondere als koaxiale elektrische Achse ausgebildet sein.

Durch die vorgeschlagene Antriebsanordnung kann in äußerst kompakter Bauweise die notwendige Übersetzung mittels eines Getriebes (Planetenkoppelgetriebe) für einen elektrischen Antrieb dargestellt werden. Durch die insbesondere radial kompakte Bauweise kann bei Fahrzeugen, die mit einer solchen Antriebsanordnung ausgestattet sind, eine vergleichsweise große Bodenfreiheit erreicht werden.

Wie bereits angedeutet, ist die Antriebsanordnung für ein Fahrzeug eingerichtet und/oder bestimmt. Bei dem Fahrzeug kann es sich um ein teilelektrisch oder vollelektrisch betriebenes Fahrzeug (Traktionsantrieb) handeln, bspw. einen PKW. Unabhängig davon kann es sich bei der Antriebswelle um die Rotorwelle der elektrischen Maschine oder um eine von der Rotorwelle separate Welle handeln, die mit der Rotorwelle drehfest gekoppelt ist. Die elektrische Maschine kann weiter einen Stator und/oder ein Gehäuse aufweisen.

Gemäß einer Weiterbildung kann die Abtriebswelle zumindest abschnittsweise als Hohlwelle ausgebildet und derart angeordnet sein, dass diese die erste Planetenstufe, die Zwischenwelle und/oder die zweite Planetenstufe nach (radial) außen umgibt. Dies trägt zu einer vergleichsweise kompakten Bauweise bei. Die Abtriebswelle kann einen hohlzylindrischen bzw. kreisringförmigen Abschnitt (Querschnitt bzw. Innen- und/oder Außendurchmesser konstant), einen schalenförmigen Abschnitt (Querschnitt verjüngt sich) und einen Abtriebsabschnitt (bspw. als Vollwelle ausgebildet) aufweisen. An dem der elektrischen Maschine zugewandten Ende kann die Abtriebswelle drehfest mit dem Hohlrad der zweiten Planetenstufe verbunden sein.

Gemäß einer Weiterbildung kann das Sonnenrad der zweiten Planetenstufe mittels Planetenrädern der zweiten Planetenstufe mit dem Hohlrad der zweiten Planetenstufe gekoppelt sein, wobei die Planetenräder der zweiten Planetenstufe an einem Gehäuseabschnitt der elektrischen Maschine drehbar gelagert sind. Dies trägt ebenfalls zu einer kompakten Ausgestaltung der Antriebsanordnung mit vergleichsweise wenigen Komponenten bei. Insbesondere können die Planetenräder jeweils mittels einer Planetenraddrehachse, die am Gehäuseabschnitt der elektrischen Maschine befestigt ist, drehbar am Gehäuseabschnitt der elektrischen Maschine gelagert sein.

Gemäß einer Weiterbildung kann die erste Planetenstufe an einer (axialen) Seite des Getriebes angeordnet sein, welche von der elektrischen Maschine abgewandt ist. Dies begünstigt eine vergleichsweise einfache Umsetzung einer Abstützung bzw. Lagerung der Planetenräder der zweiten Planetenstufe an einem Gehäuseabschnitt der elektrischen Maschine.

Gemäß einer Weiterbildung kann das Getriebe derart eingerichtet sein, dass bei einem Antrieb des Getriebes durch die elektrische Maschine (Antriebsbetriebszustand der Antriebsanordnung) ein Teil des von der elektrischen Maschine auf das Getriebe übertragenen Drehmoments mittels der Planetenräder der ersten Planetenstufe auf die Abtriebswelle übertragen wird und dass ein weiterer Teil des von der elektrischen Maschine auf das Getriebe übertragenen Drehmoments über das Hohlrad der ersten Planetenstufe, die Zwischenwelle und die zweite Planetenstufe auf die Abtriebswelle übertragen wird. Auf diese Weise wird eine Drehmoments- bzw. Leistungsverzweigung realisiert. Somit werden Komponenten des Getriebes (Planetenkoppelgetriebe), i.e. Komponenten der Planetenradstufen, im Antriebsbetriebszustand geringer belastet als in herkömmlichen Planetenkoppelgetrieben und können dadurch kompakter, leichter und kostengünstiger ausgelegt werden.

Gemäß einer Weiterbildung kann das Getriebe derart eingerichtet sein, dass bei einem Antrieb des Getriebes durch die Abtriebswelle (Rekuperationsbetriebszustand der Antriebsanordnung) ein Teil des von der Abtriebswelle auf das Getriebe übertragenen Drehmoments mittels der Planetenräder der ersten Planetenstufe auf die Antriebswelle übertragen wird und ein weiterer Teil des von der Abtriebswelle auf das Getriebe übertragenen Drehmoments über die zweite Planetenstufe, die Zwischenwelle und das Hohlrad der ersten Planetenstufe auf die Antriebswelle übertragen wird. Somit werden Komponenten des Getriebes (Planetenkoppelgetriebe), i.e. Komponenten der Planetenradstufen, im Rekuperationsbetriebszustand geringer belastet als in herkömmlichen Planetenkoppelgetrieben und können dadurch kompakter, leichter und kostengünstiger ausgelegt werden.

Gemäß einer Weiterbildung kann die Abtriebswelle, vorzugsweise direkt bzw. unmittelbar, mit einem Radnabenantrieb gekoppelt sein, so dass die Abtriebswelle eine Radnabe des Radnabenantriebs antreiben kann. Somit kann die (am Außendurchmesser befindliche) Abtriebswelle einfach und direkt als Antrieb in Radnabenantrieben verwendet werden. Mit anderen Worten kann die Antriebsanordnung als Radnabenantrieb ausgebildet sein.

Nachfolgend werden mögliche Ausführungsformen der Erfindung unter Bezugnahme auf die beiliegenden Zeichnungen erläutert. Es zeigen, jeweils schematisch,

Fig.1    eine Ausgestaltung einer Antriebsanordnung in einer Schnittansicht;

Fig.2    eine Ausgestaltungsmöglichkeit der Antriebsanordnung in einer Schnittansicht; und

Fig.3    ein Flussschema des Leistungsflusses der Antriebsanordnung.

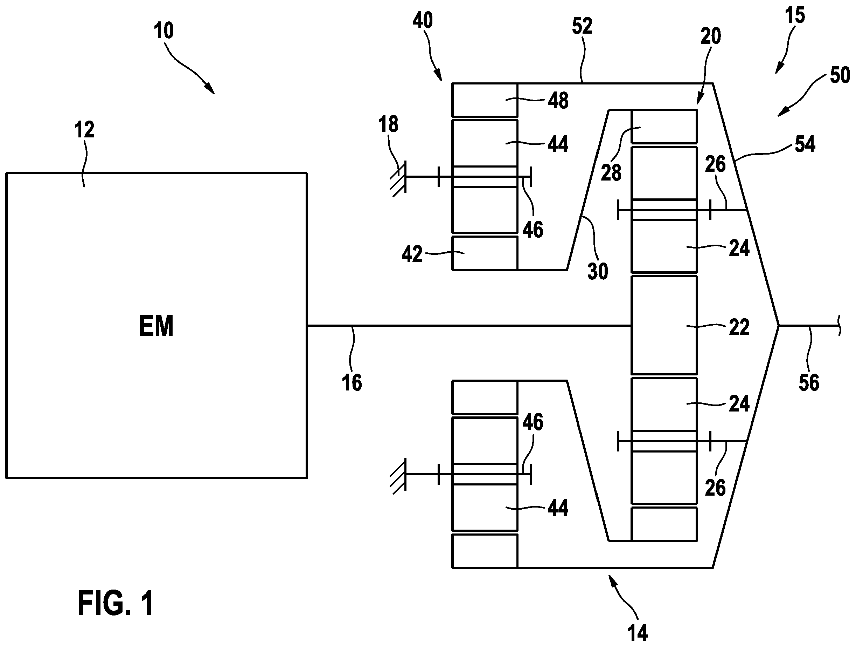

Eine Antriebsanordnung trägt in Figur 1 insgesamt das Bezugszeichen 10. Die Antriebsanordnung 10 weist eine elektrische Maschine 12, ein Getriebe 14 und eine Abtriebswelle 50 auf. Das Getriebe 14 weist eine erste Planetenstufe 20 (erstes Planetengetriebe 20) und eine zweite Planetenstufe 40 (zweites Planetengetriebe 40) auf.

Die elektrische Maschine 12 ist mit einer Antriebswelle 16 gekoppelt, so dass die elektrische Maschine 12 die Antriebswelle 16 drehend antreiben kann. Die Antriebswelle 16 ist drehfest mit einem Sonnenrad 22 der ersten Planetenstufe 20 verbunden. Ein Hohlrad 28 der ersten Planetenstufe 20, welches mit dem Sonnenrad 22 der ersten Planetenstufe 20 gekoppelt ist, ist mittels einer Zwischenwelle 30 drehfest mit einem Sonnenrad 42 der zweiten Planetenstufe 40 verbunden. Ein Hohlrad 48 der zweiten Planetenstufe 40, welches mit dem Sonnenrad 42 der zweiten Planetenstufe 40 gekoppelt ist, ist drehfest mit der Abtriebswelle 50 verbunden.

Bei der Antriebswelle 16 kann es sich um die Rotorwelle der elektrischen Maschine 12 oder um eine von der Rotorwelle separate Welle handeln, die mit der Rotorwelle drehfest gekoppelt ist. Die elektrische Maschine 12 kann weiter einen Stator und/oder ein Gehäuse aufweisen (nicht gezeigt).

Die Abtriebswelle 50 ist im Beispiel abschnittsweise als Hohlwelle ausgebildet und derart angeordnet, dass diese die erste Planetenstufe 20, die Zwischenwelle 30 und die zweite Planetenstufe 40 nach radial außen umgibt. Die Hohlwelle 50 weist im Beispiel einen hohlzylindrischen bzw. kreisringförmigen Abschnitt 52 (Querschnitt bzw. Innen- und/oder Außendurchmesser konstant), einen schalenförmigen Abschnitt 54 (Querschnitt verjüngt sich) und einen Abtriebsabschnitt 56 (bspw. als Vollwelle ausgebildet) auf. An dem der elektrischen Maschine 12 zugewandten Ende ist die Abtriebswelle 50 bzw. deren Abschnitt 52 drehfest mit dem Hohlrad 48 der zweiten Planetenstufe 40 verbunden.

Das Sonnenrad 22 der ersten Planetenstufe 20 ist mittels Planetenrädern 24 mit dem Hohlrad 28 gekoppelt. Die Planetenräder 24 sind an einem Abschnitt der Abtriebswelle 50, im Beispiel am schalenförmigen Abschnitt 54 der Abtriebswelle 50 drehbar gelagert. Die Planetenräder 24 sind jeweils mittels einer Planetenraddrehachse 26, die am schalenförmigen Abschnitt 54 der Abtriebswelle 50 befestigt ist, drehbar an der Abtriebswelle 50 gelagert.

Das Sonnenrad 42 der zweiten Planetenstufe 40 ist mittels Planetenrädern 44 mit dem Hohlrad 48 gekoppelt. Die Planetenräder 44 sind an einem Gehäuseabschnitt 18 der elektrischen Maschine 12 drehbar gelagert. Die Planetenräder 44 sind jeweils mittels einer Planetenraddrehachse 46, die am Gehäuseabschnitt 18 der elektrischen Maschine 12 befestigt ist, drehbar am Gehäuseabschnitt 18 der elektrischen Maschine 12 gelagert. Die erste Planetenstufe 20 ist im Beispiel an einer (axialen) Seite 15 des Getriebes 14 angeordnet, welche von der elektrischen Maschine 12 abgewandt ist.

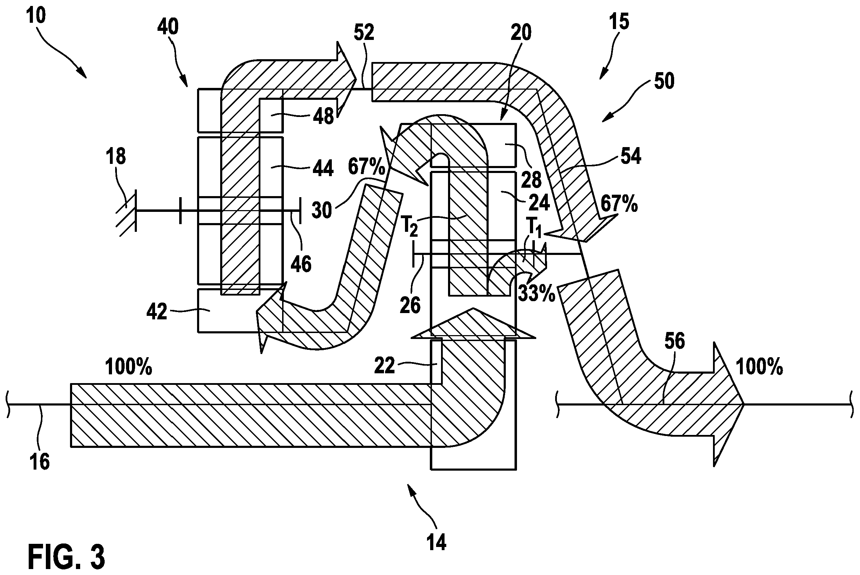

Diese Bauweise erlaubt eine Leistungsverzweigung, wie weiter unten mit Bezug auf Fig.3 erläutert.

Die Abtriebswelle 50 bzw. deren Abtriebabschnitt 56 ist im Beispiel direkt bzw. unmittelbar mit einem Radnabenantrieb gekoppelt (nicht gezeigt), so dass die Abtriebswelle 50 eine Radnabe des Radnabenantriebs antreiben kann. Somit kann die Antriebsanordnung 10 als Radnabenantrieb ausgebildet sein.

Die Antriebswelle 16 ist im Beispiel als Vollwelle ausgebildet. Der Abtriebsabschnitt 56 der Abtriebswelle 50 ist im Beispiel ebenfalls als Vollwelle ausgebildet. Die Mittellängsachsen der Antriebswelle 16 und des Abtriebsabschnitts 56 können parallel oder koaxial zueinander orientiert sein.

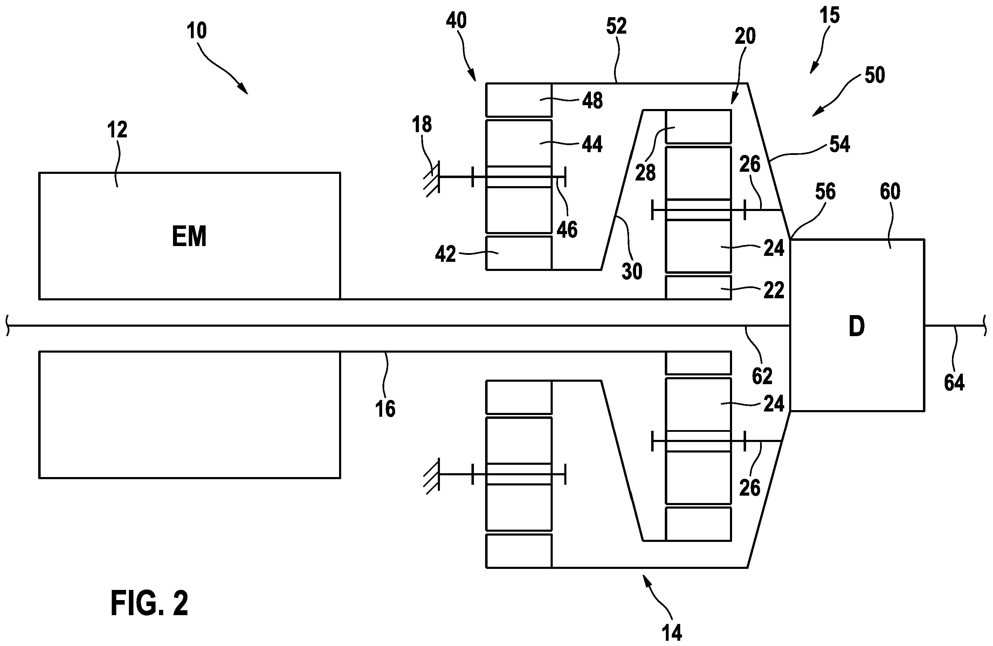

Figur 2 zeigt eine Ausgestaltungsmöglichkeit der Antriebsanordnung 10, wobei gleiche oder funktional gleiche Elemente mit identischen Bezugszeichen versehen sind und zur Vermeidung von Wiederholungen zunächst auf die voranstehenden Ausführungen verwiesen wird.

Abweichend davon weist die Antriebsanordnung 10 eine Antriebswelle 16 auf, die als Hohlwelle ausgebildet ist. Die Abtriebswelle 50 ist, insbesondere an deren Abtriebsabschnitt 56, mit einem Differentialgetriebe 60 gekoppelt, so dass die Abtriebswelle 60 das Differentialgetriebe 60, insbesondere dessen Differentialkörper oder Umlaufradträger (nicht gezeigt), antreiben kann.

Das Differentialgetriebe 60 kann als Kegelraddifferential oder als Stirnraddifferential ausgebildet sein. Das Differentialgetriebe 60 weist zwei Abtriebswellen 62, 64 auf, von denen sich die Abtriebswelle 62, insbesondere koaxial, durch die Antriebswelle 16 hindurch erstreckt. Somit kann die Antriebsanordnung 10 als elektrische Achse (E-Achse) ausgebildet sein.

Figur 3 veranschaulicht den Drehmoment- bzw. Leistungsfluss der Antriebsanordnung 10 in einem Halbschnitt (gilt für beide oben beschriebenen Ausführungen).

Dabei zeigt Figur 3 den Leistungsfluss für den Fall, dass die elektrische Maschine 12 das Getriebe 14 antreibt, d.h. die elektrische Maschine 12 mittels der Antriebswelle 16 ein Drehmoment auf das Getriebe 14 und die Abtriebswelle 50 überträgt (Antriebsbetriebszustand der Antriebsanordnung 10). Der Leistungsfluss ist mittels Pfeilen veranschaulicht, wobei die angegebenen Prozentsätze beispielhaft gewählt und von der Getriebeauslegung abhängig sind (andere Prozentsätze denkbar).

Das Getriebe 14 ist im Beispiel derart eingerichtet, dass bei einem Antrieb des Getriebes 14 durch die elektrische Maschine 12 (Antriebsbetriebszustand der Antriebsanordnung 10) ein Teil $T_1$ des von der elektrischen Maschine 12 auf das Getriebe 14 übertragenen Drehmoments mittels der Planetenräder 24 der ersten Planetenstufe 20 auf die Abtriebswelle 50 bzw. deren schalenförmigen Abschnitt 54 übertragen wird und dass ein weiterer Teil $T_2$ des von der elektrischen Maschine 12 auf das Getriebe übertragenen Drehmoments über das Hohlrad 28 der ersten Planetenstufe 20, die Zwischenwelle 30 und die zweite Planetenstufe 40 auf die Abtriebswelle 50 bzw. deren hohlzylindrischen Abschnitt 52 übertragen wird.

Auf diese Weise wird eine Drehmoments- bzw. Leistungsverzweigung realisiert. Somit werden Komponenten des Getriebes 14 (Planetenkoppelgetriebe), i.e. Komponenten der Planetenradstufen 20,40, im Antriebsbetriebszustand geringer belastet als in herkömmlichen Planetenkoppelgetrieben und können dadurch kompakter, leichter und kostengünstiger ausgelegt werden, wie oben erläutert.

Wie zuvor bereits erläutert, stellen in Figur 3 die Pfeile den Leistungsfluss im Antriebsbetriebszustand der Antriebsanordnung 10 dar. In dem Fall, dass die Abtriebswelle 50 bei Rekuperation das Getriebe 14 antreibt (Rekuperationsbetriebszustand der Antriebsanordnung 10), entspricht der Leistungsfluss der umgekehrten Richtung der Pfeile. Somit kann auch im Rekuperationsbetriebszustand eine Leistungsverzweigung erfolgen, wie oben erläutert.

Die Gesamtübersetzung lässt sich in Abhängigkeit der Standübersetzungen der einzelnen Planetenradsätze wie folgt berechnen:

$$i_{ges} = 1 - i_{OI} \cdot \frac{\left(\frac{1}{i_{OII}}\right) - 1}{\left(\frac{1}{i_{OII}}\right)}$$

wobei $i_{ges}$ die Gesamtübersetzung, $i_{OI}$ die Standübersetzung der ersten Planetenstufe und $i_{OII}$ die Standübersetzung der zweiten Planetenstufe ist.

**Patentansprüche**

1. Antriebsanordnung (10), insbesondere für ein Fahrzeug, mit einer elektrischen Maschine (12), einem Getriebe (14) und einer Abtriebswelle (50), wobei das Getriebe (14) eine erste Planetenstufe (20) und eine zweite Planetenstufe (40) aufweist, wobei die elektrische Maschine (12) mit einer Antriebswelle (16) gekoppelt ist, so dass die elektrische Maschine (12) die Antriebswelle (16) antreiben kann, wobei die Antriebswelle (16) drehfest mit einem Sonnenrad (22) der ersten Planetenstufe (20) verbunden ist, wobei ein Hohlrad (28) der ersten Planetenstufe (20), welches mit dem Sonnenrad (22) der ersten Planetenstufe (20) gekoppelt ist, mittels einer Zwischenwelle (30) drehfest mit einem Sonnenrad (42) der zweiten Planetenstufe (40) verbunden ist, und wobei ein Hohlrad (48) der zweiten Planetenstufe (40), welches mit dem Sonnenrad (42) der zweiten Planetenstufe (40) gekoppelt ist, drehfest mit der Abtriebswelle (50) verbunden ist, wobei das Sonnenrad (22) der ersten Planetenstufe (20) mittels Planetenrädern (24) der ersten Planetenstufe (20) mit dem Hohlrad (28) der ersten Planetenstufe (20) gekoppelt ist, wobei die Planetenräder (24) der ersten Planetenstufe (24) an einem Abschnitt (56) der Abtriebswelle (50) drehbar gelagert sind, wobei die Abtriebswelle (50) mit einem Differentialgetriebe (60) gekoppelt ist, so dass die Abtriebswelle (50) das Differentialgetriebe (60) antreiben kann, und wobei das Differentialgetriebe (60) zwei Abtriebswellen (62, 64) aufweist, **dadurch gekennzeichnet, dass** die Antriebswelle (16) als Hohlwelle ausgebildet ist und sich eine der Abtriebswellen (62) durch die Antriebswelle (16) hindurch erstreckt.

2. Antriebsanordnung (10) nach Anspruch 1, **dadurch gekennzeichnet, dass** die Abtriebswelle (50) zumindest abschnittsweise als Hohlwelle ausgebildet und derart angeordnet ist, dass diese die erste Planetenstufe (20), die Zwischenwelle (30) und/oder die zweite Planetenstufe (40) nach außen umgibt.

3. Antriebsanordnung (10) nach einem der vorstehenden Ansprüche, **dadurch gekennzeichnet, dass** das Sonnenrad (42) der zweiten Planetenstufe (40) mittels Planetenrädern (44) der zweiten Planetenstufe (40) mit dem Hohlrad (48) der zweiten Planetenstufe (40) gekoppelt ist, wobei die Planetenräder (44) der zweiten Planetenstufe (40) an einem Gehäuseabschnitt (18) der elektrischen Maschine (12) drehbar gelagert sind.

4. Antriebsanordnung (10) nach einem der vorstehenden Ansprüche, **dadurch gekennzeichnet, dass** die erste Planetenstufe (20) an einer Seite (15) des Getriebes (14) angeordnet ist, welche von der elektrischen Maschine (12) abgewandt ist.

5. Antriebsanordnung (10) nach einem der Ansprüche 1 bis 4, **dadurch gekennzeichnet, dass** das Getriebe (14) derart eingerichtet ist, dass bei einem Antrieb des Getriebes (14) durch die elektrische Maschine (12) ein Teil ($T_1$) des von der elektrischen Maschine (12) auf das Getriebe (14) übertragenen Drehmoments mittels der Planetenräder (24) der ersten Planetenstufe (20) auf die Abtriebswelle (50) übertragen wird und ein weiterer Teil ($T_2$) des von der elektrischen Maschine (12) auf das Getriebe (14) übertragene Drehmoment über das Hohlrad (28) der ersten Planetenstufe (20), die Zwischenwelle (30) und die zweite Planetenstufe (40) auf die Abtriebswelle (50) übertragen wird.

6. Antriebsanordnung (10) nach einem der Ansprüche 1 bis 5, **dadurch gekennzeichnet, dass** das Getriebe (14) derart eingerichtet ist, dass bei einem Antrieb des Getriebes (14) durch die Abtriebswelle (50) ein Teil des von der Abtriebswelle (50) auf das Getriebe (14) übertragenen Drehmoments mittels der Planetenräder (24) der ersten Planetenstufe (20) auf die Antriebswelle (16) übertragen wird und ein weiterer Teil des von der Abtriebswelle (50) auf das Getriebe (14) übertragenen Drehmoments über die zweite Planetenstufe (40), die Zwischenwelle (30) und das Hohlrad (28) der ersten Planetenstufe (20) auf die Antriebswelle (16) übertragen wird.

7. Antriebsanordnung (10) nach einem der voranstehenden Ansprüche, **dadurch gekennzeichnet, dass** die Abtriebswelle (50) mit einem Radnabenantrieb gekoppelt ist, so dass die Abtriebswelle (50) eine Radnabe des Radnabenantriebs antreiben kann.

**Claims**

1. Drive arrangement (10), in particular for a vehicle, having an electric machine (12), having a transmission (14) and having an output shaft (50), wherein the transmission (14) has a first planetary stage (20) and a second planetary stage (40), wherein the electric machine (12) is coupled to a drive shaft (16) so that the electric machine (12) can drive the drive shaft (16), wherein the drive shaft (16) is connected rotationally conjointly to a sun gear (22) of the first planetary stage (20), wherein a ring gear (28) of the first planetary stage (20), which is coupled to the sun gear (22) of the first planetary stage (20), is connected rotationally conjointly to a sun gear (42) of the second planetary stage (40) by means of an intermediate shaft (30), and wherein a ring gear (48) of the second planetary stage (40), which is coupled to the sun gear (42) of the second planetary stage (40), is connected rotationally conjointly to the output shaft (50), wherein the sun gear (22) of the first planetary stage (20) is coupled to the ring gear (28) of the first planetary stage (20) by means of planet gears (24) of the first planetary stage (20), wherein the planet gears (24) of the first planetary stage (24) are mounted rotatably on a section (56) of the output shaft (50), wherein the output shaft (50) is coupled to a differential transmission (60) so that the output shaft (50) can drive the differential transmission (60), and wherein the differential transmission (60) has two output shafts (62, 64), **characterized in that** the drive shaft (16) is designed as a hollow shaft and one of the output shafts (62) extends through the drive shaft (16).

2. Drive arrangement (10) according to Claim 1, **characterized in that** the output shaft (50) is designed at least sectionally as a hollow shaft and is arranged in such a way that it outwardly surrounds the first planetary stage (20), the intermediate shaft (30) and/or the second planetary stage (40).

3. Drive arrangement (10) according to either of the preceding claims, **characterized in that** the sun gear (42) of the second planetary stage (40) is coupled to the ring gear (48) of the second planetary stage (40) by means of planet gears (44) of the second planetary stage (40), wherein the planet gears (44) of the second planetary stage (40) are mounted rotatably on a housing section (18) of the electric machine (12).

4. Drive arrangement (10) according to one of the preceding claims, **characterized in that** the first planetary stage (20) is arranged on a side (15) of the transmission (14) that is relatively remote from the electric machine (12).

5. Drive arrangement (10) according to one of Claims 1 to 4, **characterized in that** the transmission (14) is configured in such a way that, in the case of the transmission (14) being driven by the electric machine (12), a part $(T_1)$ of the torque transmitted from the electric machine (12) to the transmission (14) is transmitted to the output shaft (50) by means of the planet gears (24) of the first planetary stage (20), and a further part $(T_2)$ of the torque transmitted from the electric machine (12) to the transmission (14) is transmitted to the output shaft (50) via the ring gear (28) of the first planetary stage (20), the intermediate shaft (30) and the second planetary stage (40).

6. Drive arrangement (10) according to one of Claims 1 to 5, **characterized in that** the transmission (14) is configured in such a way that, in the case of the transmission (14) being driven by the output shaft (50), a part of the torque transmitted from the output shaft (50) to the transmission (14) is transmitted to the drive shaft (16) by means of the planet gears (24) of the first planetary stage (20), and a further part of the torque transmitted from the output shaft (50) to the transmission (14) is transmitted to the drive shaft (16) via the second planetary stage (40), the intermediate shaft (30) and the ring gear (28) of the first planetary stage (20).

7. Drive arrangement (10) according to one of the preceding claims, **characterized in that** the output shaft (50) is coupled to a wheel-hub drive so that the output shaft (50) can drive a wheel hub of the wheel-hub drive.

**Revendications**

1. Dispositif d'entraînement (10), notamment pour un véhicule, comprenant une machine électrique (12), une boîte de vitesses (14) et d'un arbre de sortie (50), la boîte de vitesses (14) possédant un premier étage planétaire (20) et un deuxième étage planétaire (40), la machine électrique (12) étant couplée à un arbre d'entraînement (16), de telle sorte que la machine électrique (12) peut entraîner l'arbre d'entraînement (16), l'arbre d'entraînement (16) étant relié en rotation solidaire à une roue solaire (22) du premier étage planétaire (20), une couronne dentée (28) du premier étage planétaire (20), laquelle est couplée à la roue solaire (22) du premier étage planétaire (20), étant relié en rotation solidaire à une roue solaire (42) du deuxième étage planétaire (40) au moyen d'un arbre intermédiaire (30), et une couronne dentée (48) du deuxième étage planétaire (40), laquelle est couplée à la roue solaire (42) du deuxième étage planétaire (40), étant reliée en rotation solidaire à l'arbre de sortie (50), la roue solaire (22) du premier étage planétaire (20) étant couplée à la couronne dentée (28) du premier étage planétaire (20) au moyen de roues planétaires (24) du premier étage planétaire (20), les roues planétaires (24) du premier étage planétaire (24) étant montées rotatives au niveau d'une portion (56) de l'arbre de sortie (50), l'arbre de sortie (50) étant couplé à une boîte différentielle (60) de sorte que l'arbre de sortie (50) peut entraîner la boîte différentielle (60) et la boîte différentielle (60) possédant deux arbres de sortie (62, 64), **caractérisé en ce que** l'arbre d'entraînement (16) est réalisé sous la forme d'un arbre creux et l'un des arbres de sortie (62) s'étend à travers l'arbre d'entraînement (16).

2. Dispositif d'entraînement (10) selon la revendication 1, **caractérisé en ce que** l'arbre de sortie (50) est réalisé, au moins dans certaines portions, sous la forme d'un arbre creux et disposé de telle sorte que celui-ci entoure vers l'extérieur le premier étage planétaire (20), l'arbre intermédiaire (30) et/ou le deuxième étage planétaire (40).

3. Dispositif d'entraînement (10) selon l'une des revendications précédentes, **caractérisé en ce que** la roue solaire (42) du deuxième étage planétaire (40) est couplée au moyen de roues planétaires (44) du deuxième étage planétaire (40) à la couronne dentée (48) du deuxième étage planétaire (40), les roues planétaires (44) du deuxième étage planétaire (40) étant montées rotatives sur une portion de boîtier (18) de la machine électrique (12).

4. Dispositif d'entraînement (10) selon l'une des revendications précédentes, **caractérisé en ce que** le premier étage planétaire (20) est disposé d'un côté (15) de la boîte de vitesses (14), qui est à l'opposé de la machine électrique (12).

5. Dispositif d'entraînement (10) selon l'une des revendications 1 à 4, **caractérisé en ce que** la boîte de vitesses (14) est conçue de telle sorte que, lors d'un entraînement de la boîte de vitesses (14) par la machine électrique (12), une partie ($T_1$) du couple transmis par la machine électrique (12) à la boîte de vitesses (14) est transmise à l'arbre de sortie (50) au moyen des roues planétaires (24) du premier étage planétaire (20) et une partie supplémentaire ($T_2$) du couple transmis par la machine électrique (12) à la boîte de vitesses (14) est transmise à l'arbre de sortie (50) via la couronne dentée (28) du premier étage planétaire (20), l'arbre intermédiaire (30) et le deuxième étage planétaire (40).

6. Dispositif d'entraînement (10) selon l'une des revendications 1 à 5, **caractérisée en ce que** la boîte de vitesses (14) est conçue de telle sorte que lors d'un entraînement de la boîte de vitesses (14) par l'arbre de sortie (50), une partie du couple transmis de l'arbre de sortie (50) à la boîte de vitesses (14) est transmise à l'arbre d'entraînement (16) au moyen des roues planétaires (24) du premier étage planétaire (20) et une autre partie du couple transmis par l'arbre de sortie (50) à la boîte de vitesses (14) est transmise à l'arbre d'entraînement (16) via le deuxième étage planétaire (40), l'arbre intermédiaire (30) et la couronne dentée (28) du premier étage planétaire (20).

7. Dispositif d'entraînement (10) selon l'une des revendications précédentes, **caractérisé en ce que** l'arbre de sortie (50) est couplé à un entraînement de moyeu de roue, de sorte que l'arbre de sortie (50) peut entraîner un moyeu de roue de l'entraînement de moyeu de roue.

FIG. 1

**FIG. 2**

EP 4 098 464 B1

**FIG. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015207074 B4
- DE 102017006266 A1
- DE 102019212556 B3